# EUROPÄISCHE PATENTANMELDUNG

(11) **EP 0 651 491 A1**
(43) Veröffentlichungstag der Anmeldung: **03.05.1995**
(21) Anmeldenummer: 94117111.8
(22) Anmeldetag: 28.10.1994
(51) Int. Cl.: H02H 9/06

(54) **Überspannungsbegrenzer**

(30) Priorität: 30.10.1993 DE 9316664 U
(71) Anmelder: Alarmcom Leutron Gesellschaft für elektronische Sicherheitstechnik mbH, D-70771 Leinfelden-Echterdingen (DE)
(72) Erfinder: Jelen, Jörg, D-70794 Filderstadt (DE)
(74) Vertreter: Dittrich, Horst, Dr.

(57) **Zusammenfassung**

Der Überspannungsbegrenzer enthält eine zwei spannungsführende Stromleiter (L, N) verbindende Reihenschaltung eines Varistors (V) und eine mit diesem thermisch gekoppelte Abtrennvorrichtung (AT₁) mit einer bestimmten Schalttemperatur (δ₁). Parallel zur Abtrennvorrichtung (AT₁) ist ein Gasentladungsableiter (A) oder dergleichen geschaltet:

## Beschreibung

Die Erfindung betrifft einen Überspannungsbegrenzer gemäß Oberbegriff des Anspruches 1.
Eine derartige, DIN VDE 0675, Teil 6, Entwurf '89 entsprechende Schaltung weist keine weiteren Bauelemente auf, wenn man von einer angeschlossenen roten Lampe, die ein Abtrennen anzeigt, oder einer Fernanzeige absieht. Nach Anzeige des Abtrennens muß der Varistor wegen Überhitzung durch zu hohen Leckstrom so früh wie möglich ausgewechselt werden. Bis dahin besteht aber kein Überspannungsschutz mehr.

Demgegenüber bietet ein erfindungsgemäßer Überspannungsbegrenzer nach Anspruch 1 auch dann noch einen Überspannungsschutz durch den Ventilableiter, bestehend aus der Reihenschaltung von Varistor und Gasentladungsableiter, (statt dessen eine Luftfunkenstrecke oder Gleitentladungsstrecke oder anderes verwendbar sein könnte,) wenn der Varistor einen zu niedrigen Stromwiderstand annimmt, da der Ableiter selbst den Leckstrom des Varistors völlig abschalten kann.
Man besitzt also nach Anzeige der Abtrennung nach wie vor Überspannungsschutz, weswegen der erfindungsgemäße Überspannungsbegrenzer auch erst nach längerer Zeit, z. B. im Rahmen einer jährlichen Kontrolle, ausgetauscht werden muß.
Mit einer bevorzugten Begrenzer-Ausführung nach Anspruch 2 erreicht man einen aktiv-redundanten Überspannungsschutz, wobei die Schalttemperatur z.B. ca. 383 K (110^{o} C) statt 368 K (95^{o} C) beträgt. Die zweite Abtrennvorrichtung öffnet also stets wesentlich später als die erste, um den Ableiter zwischenzeitlich zur Wirkung zu bringen.

Die Erfindung betrifft auch einen Überspannungsbegrenzer gemäß Oberbegriff des Anspruches 3.
Eine derartige Standardausführung (LeutronEnerPro 220 Tr) ohne zusätzliche Bauelemente (außer der Fern-/Anzeige) weist den gleichen Nachteil fehlenden Überspannungsschutzes bei Ausfall eines Varistors auf wie die eingangs genannte DIN-gemäße Schaltung.
Dagegen weist ein erfindungsgemäßer überspannungsbegrenzer nach Anspruch 3 den gleichen Vorteil auf wie der Begrenzer nach Anspruch 1.
Bei einer bevorzugten Hochsicherheits-Ausführung nach Anspruch 4 erhält man wiederum Redundanz.

Gemäß Anspruch 5 kann eine spiegelbildliche Anordnung der Bauelemente bezüglich des Anschlusses an den Schutzleiter getroffen werden, falls ein Querspannungsschutz für beide Stromleiter erforderlich ist.
Dabei kann eine gewünschte Redundanz gemäß Anspruch 6 erreicht werden.

Im folgenden ist die Erfindung anhand zweier beispielhafter bevorzugter Ausführungsformen der erfindungsgemäßen Überspannungsbegrenzer im einzelnen erläutert. Es zeigt in einem Schaltbild
Figur 1 eine Ausführung nach Anspruch 2 mit 1 und
Figur 2 eine Ausführung nach Anspruch 4 mit 3
wobei die zum Stand der Technik gehörenden Schaltungsteile gestrichelt gezeichnet sind.

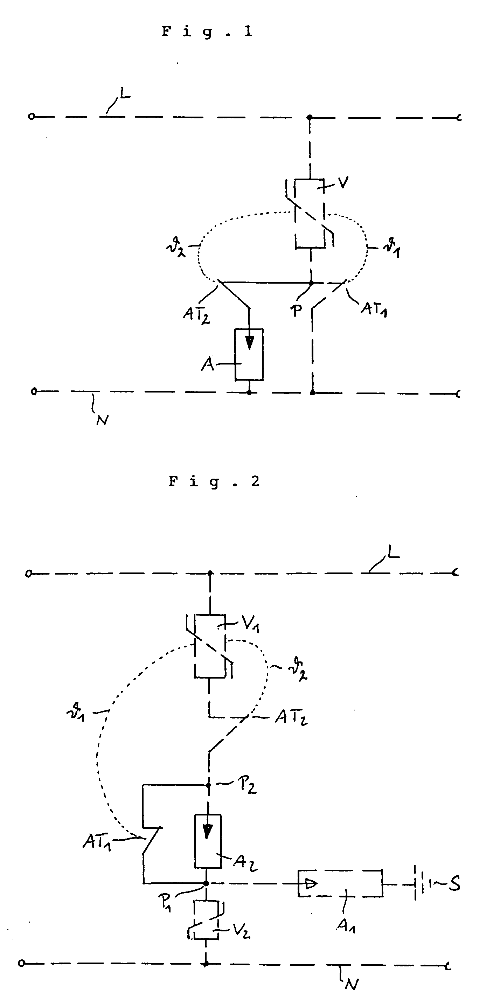

In Figur 1 hängt an zwei spannungsführenden Stromleitern L und N, die zu einem geschützten Stromaufnehmer führen, ein Varistor V bzw. ein Gasentladungsableiter A und parallel zu diesem eine erste Abtrennvorrichtung AT₁, die mit dem Varistor V thermisch gekoppelt ist und bei einer Schalttemperatur ϑ₁ öffnet. Die galvanische Reihenverbindung an der Stelle P, der Abtrennvorrichtung AT₁ und des Varistors V ist an den Ableiter A über eine thermisch gleich gekoppelte zweite Abtrennvorrichtung AT₂ angeschlossen, die erst bei einer höheren Schalttemperatur ϑ₂ des Varistors V öffnet.

Bei Überhitzung des Varistors V öffnet die erste Abtrennvorrichtung AT₁, wobei der Ableiter A gemeinsam mit dem Varistor den Überspannungsschutz übernimmt. - Bei weiterer Überhitzung öffnet schließlich auch die zweite Abtrennvorrichtung AT₂, die den Ventilableiter V+A von der Stromversorgung trennt. In Figur 2, wo die gleichen Bezugszeichen wie in Figur 1 verwendet sind, hängt der Ableiter A (A₂) nicht unmittelbar, sondern an der Stelle P (P₁) der galvanischen Verbindung einerseits über einen zweiten Varistor V₂ an dem Stromleiter N bzw. andererseits über einen ersten Gasentladungsableiter A₁ an einem Schutzleiter S, um Längs- und Querspannungsschutz zu geben. In diesem Falle sind die erste und die zweite Abtrennvorrichtung AT₁ und AT₂ aber nur parallel zum zweiten Ableiter A₂ bzw. zwischen den ersten Varistor V₁ und eine andere Stelle P₂ geschaltet, an welcher der zweite Ableiter A₂ und die erste Abtrennvorrichtung AT₁ eine galvanische Verbindung aufweisen, wobei die beiden Stellen P₁ und P₂ den zwei Polen des zweiten Ableiters A₂ entsprechen.
Bei Überhitzung des ersten Varistors V₁ öffnet die erste Abtrennvorrichtung AT₁, wobei nun der zweite Ableiter A₂ gemeinsam mit dem Varistor V₁ den Überspannungsschutz übernimmt, der bisher allein durch den Varistor V₁ gegeben war. - Bei weiterer Überhitzung öffnet wiederum die zweite Abtrennvorrichtung AT₂.
Falls das elektrische Potential des Stromleiters N angenähert so hoch über dem Potential des Schutzleiters S liegt wie das Potential des Stromleiters L, hilft eine spiegelbildliche Ausbildung der Schaltung auf der Seite des zweiten Varistors V₂.

## Patentansprüche

1. Überspannungsbegrenzer mit einer zwei spannungsführende Stromleiter (L, N) verbindenden Reihenschaltung eines Varistors (V) und einer mit diesem thermisch gekoppelten Abtrennvorrichtung (AT₁) mit bestimmter Schalttemperatur (ϑ₁), dadurch **gekennzeichnet**, daß parallel zu der Abtrennvorrichtung (AT₁) ein Gasentladungsableiter (A) oder dergleichen geschaltet ist.

2. Überspannungsbegrenzer nach Anspruch 1, dadurch gekennzeichnet, daß parallel nur zu der Abtrennvorrichtung (AT₁) eine Reihenschaltung (A-AT₂) des Ableiters (A) und einer mit dem Varistor (V) thermisch gekoppelten zweiten Abtrennvorrichtung (AT₂) mit höherer Schalttemperatur (ϑ₂) liegt.

3. Überspannungsbegrenzer für den Längs- und Querspannungsschutz, mit einer zwei spannungsführende Stromleiter (L, N) verbindenden ersten Reihenschaltung (V₁-AT₁-V₂) eines ersten Varistors (V₁), einer mit diesem thermisch gekoppelten Abtrennvorrichtung (AT₁) und eines zweiten Varistors (V₂); und mit einem die galvanische Verbindung (P₁) der Abtrennvorrichtung (AT₁) oder des ersten Varistors (V₁) einerseits und des zweiten Varistors (V₂) andererseits an einen Schutzleiter (S) anschließenden Gasentladungsableiter (A₂) oder dergleichen, dadurch **gekennzeichnet**, daß ein zweiter Gasentladungsableiter (A₂) oder dergleichen parallel zur Abtrennvorrichtung (AT₁) gelegt ist.

4. Überspannungsableiter nach Anspruch 3, dadurch gekennzeichnet, daß zwischen die erste Parallelschaltung (AT₁//A₂) der ersten Abtrennvorrichtung (AT₁) und des zweiten Ableiters (A₂) einerseits sowie den ersten Varistor (V₁) andererseits eine mit diesem (V₁) thermisch gekoppelte zweite Abtrennvorrichtung (AT₂) geschaltet ist.

5. Überspannungsbegrenzer nach Anspruch 3, gekennzeichnet durch eine bezüglich des Schutzleiter(S)-Anschlusses (P₁-A₁-S) zur ersten Reihenschaltung (V₁-AT₁/A₂) symmetrische zweite Reihenschaltung (V₂-AT₁'//A₂') des zweiten Varistors (V₂) und einer zweiten Parallelschaltung (AT₁'//A₂') einer mit diesem Varistor thermisch gekoppelten, zusätzlichen ersten Abtrennvorrichtung (AT₁') und eines zusätzlichen ersten Gasentladungsableiters (A₂') oder dergleichen.

6. Überspannungsbegrenzer nach den Ansprüchen 4 und 5, gekennzeichnet durch eine mit dem zweiten Varistor (V₂) thermisch gekoppelte, zusätzliche zweite Abtrennvorrichtung (AT₂'), die symmetrisch zur zweiten Abtrennvorrichtung (AT₂) zwischen zweitem Varistor (V₂) und zweiter Parallelschaltung (AT₁'//A₂') angeordnet ist.
